# FASCICULE DE BREVET EUROPEEN

(11) **EP 1 088 701 B1**
(45) Date de publication et mention de la délivrance du brevet: **18.04.2007**
(21) Numéro de dépôt: 00402267.9
(22) Date de dépôt: 10.08.2000
(51) Int. Cl.: B60Q 1/26

(54) **Dispositif de montage d'un feu arrière sur un élément de carrosserie d'un véhicule automobile**
Befestigungseinrichtung einer Rückleuchte auf der Kraftfahrzeugkarosserie
Device for mounting a rear light on a vehicle body

(30) Priorité: 29.09.1999 FR 9912157
(43) Date de publication de la demande: 04.04.2001
(73) Titulaire: Peugeot Citroen Automobiles SA, 92200 Neuilly sur Seine (FR)
(72) Inventeur: Jaux, Thierry, 25400 Taillecourt (FR)
(74) Mandataire: Lanceplaine, Jean-Claude

(56) Documents cités:
- FR-A- 2 296 548
- FR-A- 2 303 685

## Description

La présente invention concerne un dispositif de montage d'un feu arrière sur un élément de carrosserie d'un véhicule automobile.

Les véhicules automobiles sont équipés de feux de signalisation arrière qui sont le plus souvent disposés entre le volet de coffre ou de hayon et un pare-chocs.

Généralement, chaque feu arrière comporte un boîtier muni sur sa face avant d'une paroi transparente et qui est fixé par des moyens appropriés sur un élément de carrosserie du véhicule automobile.

Ce boîtier renferme une source lumineuse associée à un réflecteur pour diriger vers la paroi transparente le faisceau lumineux.

Le boîtier est fixé sur l'élément de carrosserie adjacent par tout moyen approprié, comme par exemple des organes de vissage ou des organes d'encliquetage, voir le document FR 2 296 548 A, qui divulgue toutes les caractéristiques du préambule de la revendication 1.

Mais, compte tenu de la forme des véhicules automobiles, il s'avère que, dans de nombreux cas, les organes de fixation du boîtier sont difficilement accessibles après le positionnement de ce boîtier sur l'élément de carrosserie ce qui complique le démontage du feu arrière par exemple pour le remplacement d'une source lumineuse ou le changement de ce feu arrière.

L'invention a pour but de proposer un dispositif de montage d'un feu arrière sur un élément de carrosserie d'un véhicule automobile qui permet d'éviter les inconvénients précédemment mentionnés.

L'invention a donc pour objet un dispositif de montage d'un feu arrière sur un élément de carrosserie d'un véhicule automobile, du type comprenant un boîtier muni d'une paroi transparente et comportant des moyens de fixation sur l'élément de carrosserie, les moyens de fixation étant formés par au moins deux organes élastiques d'encliquetage, caractérisé en ce que lesdits organes sont associés à des moyens de commande du déplacement simultané desdits organes élastiques entre une position de verrouillage du boîtier sur l'élément de carrosserie et une position de déverrouillage dudit boîtier.

Selon d'autres caractéristiques de l'invention:
- chaque organe élastique d'encliquetage est formé par une lame souple dont une extrémité est fixée sur le boîtier et dont l'autre extrémité est libre et recourbée pour former une patte d'accrochage sur l'élément de carrosserie,
- les moyens de commande sont formés, d'une part, par un levier fixé sur un élément monté articulé sur un axe solidaire du boîtier et, d'autre part, par au moins deux tiges de liaison ayant chacune une première extrémité reliée à l'extrémité libre d'une lame souple et une seconde extrémité reliée audit élément,
- l'élément est formé par un tambour,
- les extrémités des tiges de liaison fixées sur le tambour sont disposées sur ledit tambour en un point opposé par rapport à l'axe.

Les caractéristiques et avantages de l'invention apparaîtront au cours de la description qui va suivre, donnée à tire d'exemple et faite en référence aux dessins annexés, sur lesquels :
- la Fig. 1 est une vue schématique en coupe transversale d'un feu arrière de véhicule automobile équipé d'un dispositif de montage conforme à l'invention,
- la Fig. 2 est une vue schématique en perspective des moyens de commande des organes élastiques du dispositif de montage conforme à l'invention.

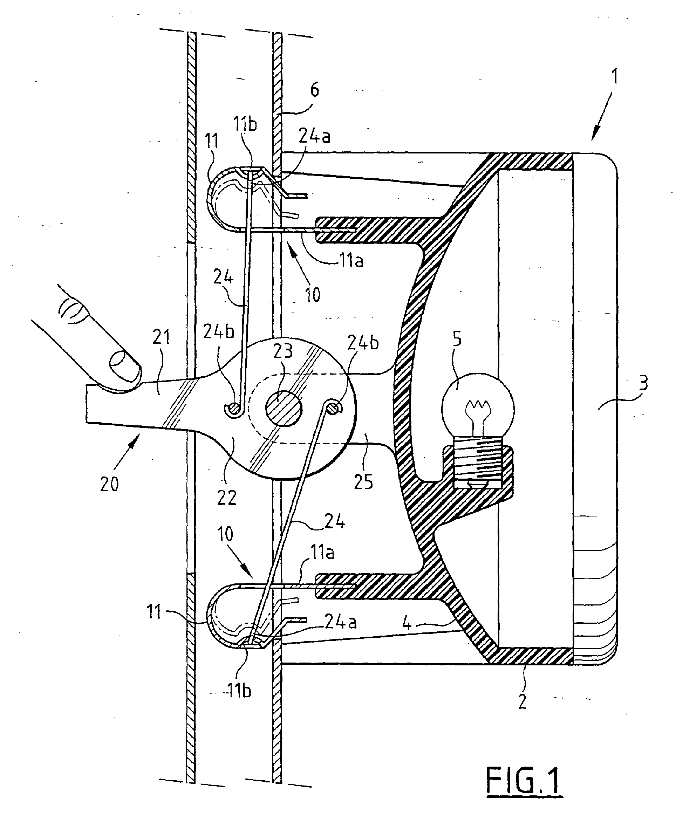

Sur la Fig. 1, on a représenté schématiquement un feu arrière d'un véhicule automobile, désigné dans son ensemble par la référence 1 et qui comporte un boîtier 2.

Le boîtier 2 comprend, à sa partie avant, une paroi transparente 3 et, à sa partie arrière, un fond 4 qui supporte une source lumineuse 5 associée à un réflecteur constitué par la face interne dudit fond 4 pour diriger, vers la paroi transparente 3, le faisceau lumineux.

Le fond 4 du boîtier 2 comporte des moyens de fixation sur un élément de carrosserie 6 du véhicule automobile.

Les moyens de fixation du boîtier 2 sur l'élément de carrosserie 6 sont formés par au moins deux organes élastiques 10 d'encliquetage associés à des moyens de commande 20 du déplacement simultané de ces organes élastiques 10 entre une position de verrouillage du boîtier 2 sur l'élément de carrosserie 6 et une position de déverrouillage dudit boîtier 2.

Dans l'exemple de réalisation représenté sur les figures, les organes élastiques 10 sont au nombre de deux et sont formés chacun par une lame souple 11 dont une extrémité 11a est fixée sur le fond 4 du boîtier 2 et dont l'autre extrémité 11b est libre et recourbée pour former une patte d'accrochage élastique sur l'élément de carrosserie 6 du véhicule automobile.

Les moyens 20 de commande du déplacement simultané des deux lames souples 11 sont formés, d'une part, par un levier 21 fixé sur un élément 22 constitué par exemple par un tambour monté articulé sur un axe 23 solidaire du fond 4 du boîtier 2 et, d'autre part, par deux tiges de liaison 24 reliant chacune le tambour 22 à l'extrémité libre 11b de la lame souple 11 correspondante.

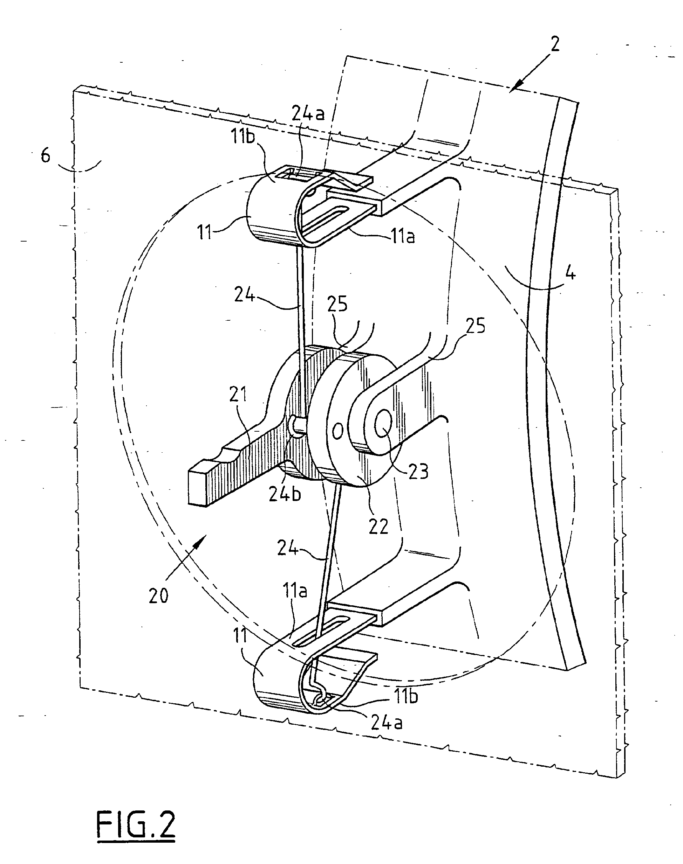

Dans l'exemple de réalisation représenté à la Fig. 2, le tambour 22 est relié au fond 4 du boîtier 2 par deux pattes 25 s'étendant parallèlement l'une par rapport à l'autre et entre lesquelles est disposé l'axe 23.

Chaque tige de liaison 24 a une première extrémité 24a reliée à l'extrémité libre 11b de la lame souple 11 correspondante et une seconde extrémité 24b reliée au tambour 22.

Ainsi que représenté notamment à la Fig. 1, les extrémités 24b des tiges de liaison 24 sont disposées sur le tambour 22 en un point opposé par rapport à l'axe 23 et, de préférence, sur une ligne formée par le levier 21 et les pattes 25.

Le montage du feu arrière 1 sur l'élément de carrosserie 6 est réalisé de l'extérieur du véhicule en présentant le fond 4 du boîtier 2 en face de l'ouverture correspondante ménagée dans l'élément de carrosserie 6.

Lors de la translation du boîtier 4 vers l'ouverture ménagée dans l'élément de carrosserie 6, les lames souples 11 viennent en butée sur cet élément de carrosserie 6 et du fait de l'élasticité de ces lames souples 11, les extrémités libres desdites lames souples 11 se replient pour passer derrière l'élément de carrosserie 6 et ensuite se déploient derrière cet élément de carrosserie 6 pour former des pattes d'accrochage du feu arrière 1 et verrouiller ledit feu arrière.

Pour permettre le démontage du boîtier 2 de l'élément de carrosserie 6, il suffit à l'utilisateur d'appuyer vers le bas sur le levier 21 ce qui a pour effet de faire pivoter le tambour 22 et donc d'exercer, par l'intermédiaire de chaque tige de liaison 24, une traction sur chaque extrémité libre 11b des lames souples 11 afin de déplacer simultanément ces extrémités libres 11b entre une position de verrouillage du boîtier 2 sur l'élément de carrosserie 6, représentée en trait plein sur la Fig. 1, et une position de déverrouillage dudit boîtier 2, représentée en pointillés sur cette Fig. 1.

Tout en maintenant la pression sur le levier 21, l'utilisateur peut donc démonter le boîtier 2 de l'élément de carrosserie 6 et procéder par exemple à son remplacement ou au changement de la source lumineuse 5.

Le dispositif de montage selon l'invention permet donc de pouvoir procéder rapidement au démontage d'un feu arrière de véhicule automobile, même dans le cas où les organes de fixation de ce feu arrière sont difficilement accessibles.

## Revendications

1. Dispositif de montage d'un feu arrière (1) sur un élément de carrosserie (6) d'un véhicule automobile, du type comprenant un boîtier (2) muni d'une paroi transparente (3) et comportant des moyens (10) de fixation sur l'élément de carrosserie (6), les moyens de fixation étant formés par au moins deux organes élastiques (11) d'encliquetage, **caractérisé en ce que** lesdites organes sont associés à des moyens (20) de commande du déplacement simultané desdits organes élastiques (11) entre une position de verrouillage du boîtier (2) sur l'élément de carrosserie (6) et une position de déverrouillage dudit boîtier.

2. Dispositif selon la revendication 1, **caractérisé en ce que** chaque organe élastique d'encliquetage est formé par une lame souple (11) dont une extrémité (11a) est fixée sur le boîtier (2) et dont l'autre extrémité (11b) est libre et recourbée pour former une patte d'accrochage sur l'élément de carrosserie.

3. Dispositif selon la revendication 1 ou 2, **caractérisé en ce que** les moyens (20) de commande sont formés, d'une part, par un levier (21) fixé sur un élément (22) monté articulé sur un axe (23) solidaire du boîtier (2) et, d'autre part, par au moins deux tiges de liaison (24) ayant chacune une première extrémité (24a) reliée à l'extrémité libre (11b) d'une lame souple (11) et une seconde extrémité (24b) reliée audit élément (22).

4. Dispositif selon la revendication 3, **caractérisé en ce que** l'élément est formé par un tambour (22).

5. Dispositif selon la revendication 3 ou 4, **caractérisé en ce que** le dispositif comporte deux tiges de liaison (24) et les extrémités (24b) des tiges de liaison (24) fixées sur le tambour (22) sont disposées sur ledit tambour en un point opposé par rapport à l'axe (23).

## Claims

1. A mounting device for a rear light (1) on a part of the bodywork (6) of an automotive vehicle, of the type comprising a housing (2) provided with a transparent wall (3) and including means (10) for fastening to the bodywork part (6), the fastening means being formed by at least two snap-fit elastic members (11), **characterised in that** said members are associated with means (20) for controlling the simultaneous movement of said elastic members (11) between a locking position of the housing (2) on the bodywork part (6) and a release position from said housing.

2. A device according to claim 1, **characterised in that** each snap-fit elastic member is formed by a flexible blade (11), one end (11a) of which is fastened to the housing (2) and the other end (11b) of which is free and curved to form a lug engaging on the bodywork part.

3. A device according to claim 1 or 2, **characterised in that** the control means (20) are formed, on the one hand, by a lever (21) fastened to an element (22) pivotably mounted about a pivot (23) attached to the housing (2) and, on the other hand, by at least two connecting rods (24), each having a first end (24a) connected to the free end (11b) of a flexible blade (11) and a second end (24b) connected to said element (22).

4. A device according to claim 3, **characterised in that** the element is formed by a drum (22).

5. A device according to claim 3 or 4, **characterised in that** the device comprises two connecting rods (24) and the ends (24b) of the connecting rods (24) fastened to the drum (22) are disposed on said drum at an opposite location in relation to the axis (23).

## Patentansprüche

1. Vorrichtung zur Befestigung einer Rückleuchte (1) an einem Karosserieelement (6) eines Kraftfahrzeugs, und zwar der Bauart, die ein Gehäuse (2) aufweist, das eine durchsichtige Wand (3) aufweist und Mittel (10) zur Befestigung am Karosserieelement (6) besitzt, wobei die Befestigungsmittel von mindestens zwei elastischen Einrastorganen (11) gebildet werden, **dadurch gekennzeichnet, dass** die Organe mit Mitteln (20) zur Steuerung der gleichzeitigen Verschiebung der elastischen Organe (11) zwischen einer Verriegelungsstellung des Gehäuses (2) am Karosserieelement (6) und einer Entriegelungsstellung des Gehäuses verbunden sind.

2. Vorrichtung nach Anspruch 1, **dadurch gekennzeichnet, dass** jedes elastische Einrastorgan von einem biegsamen Blatt (11) gebildet wird, dessen eines Ende (11a) am Gehäuse (2) befestigt und dessen andere Endes (11b) frei und gekrümmt ist, so dass es eine Klammer zur Befestigung am Karosserieelement bildet.

3. Vorrichtung nach Anspruch 1 oder 2, **dadurch gekennzeichnet, dass** die Steuermittel (20) einerseits von einem Hebel (21), der an einem Element (22) befestigt ist, das auf einer fest mit dem Gehäuse (2) verbundenen Achse (23) gelenkig montiert ist, und andererseits von mindestens zwei Verbindungsstangen (24) gebildet werden, deren erstes Ende (24a) mit dem freien Ende (11b) eines biegsamen Blattes (11) und deren zweites Ende (24b) mit dem Element (22) verbunden ist.

4. Vorrichtung nach Anspruch 3, **dadurch gekennzeichnet, dass** das Element von einer Trommel (22) gebildet wird.

5. Vorrichtung nach Anspruch 3 oder 4, **dadurch gekennzeichnet, dass** die Vorrichtung zwei Verbindungsstangen (24) aufweist, und die an der Trommel (22) befestigten Enden (24b) der Verbindungsstangen (24) auf der Trommel an einem bezüglich der Achse (23) entgegengesetzten Punkt angeordnet sind.
